# DEMANDE DE BREVET EUROPEEN

(11) **EP 0 709 125 A1**
(43) Date de publication de la demande: **01.05.1996**
(21) Numéro de dépôt: 95402223.2
(22) Date de dépôt: 05.10.1995
(51) Int. Cl.: B01D 53/40, B01D 53/50, B01D 53/52, B01D 53/68

(54) **Procédé et dispositif de neutralisation de gaz acides**

(30) Priorité: 06.10.1994 FR 9412048
(71) Demandeur: INSTITUT FRANCAIS DU PETROLE, F-92500 Rueil-Malmaison (FR)
(72) Inventeur: Martin, Gérard, F-92500 Rueil Malmaison (FR); Marty, Eric, F-92500 Rueil Malmaison (FR)

(57) **Abrégé**

On traite les gaz acides issus du procédé de thermolyse de déchets en les neutralisant à l'aide d'un produit de synthèse renfermant du carbonate de calcium et/ou un de ses dérivés.

## Description

La présente invention concerne le traitement de gaz polluant, et plus spécifiquement le traitement des gaz acides issus de la décomposition de déchets sous l'action de la chaleur .

L'invention trouve des applications notamment dans les dispositifs permettant de neutraliser les gaz acides, produits par la thermolyse de déchets, tels le chlorure d'hydrogène, le fluorure d'hydrogène, le sulfure d'hydrogène et/ou les oxydes de soufre.

Les déchets contenant des composés chimiques riches en chlore, fluor et soufre, peuvent produire au cours d'un traitement thermique des gaz acides résultant de leur décomposition sous l'action de la chaleur. En particulier, les déchets riches en composés chimiques synthétiques tels que les matières plastiques (PVC, par exemple), les élastomères....sont responsables de l'émission des gaz acides qui sont considérés comme des gaz polluants très corrosifs. Ces gaz peuvent être à l'origine d'importants problèmes de corrosion, notamment dans les parties exposées des installations de traitement thermique des déchets.

Leur rejet dans l'atmosphère peut, de plus, avoir des conséquences néfastes sur l'environnement, par exemple sur la faune et la flore, telle la déforestation.

Les procédés et dispositifs de traitement des gaz acides présentent en général l'inconvénient notable d'être coûteux, du fait de l'utilisation d'absorbant tel que la chaux ou le calcaire et d'équipements spécifiques, qui augmentent considérablement le coût des procédés de traitement de déchets.

Pour des raisons économiques évidentes, il est nécessaire de développer des procédés et des dispositifs de plus en plus performants et de moins en moins coûteux permettant de limiter les émissions des composés nocifs, notamment l'émission des gaz acides ci-dessus mentionnés.

De plus, la législation concernant le rejet de polluants, en particulier les valeurs limites d'émission des gaz acides polluants dans l'atmosphère, est de plus en plus en plus sévère, et tend vers une normalisation à des valeurs plus contraignantes déjà appliquées dans certains pays de la CEE.

Un procédé connu de neutralisation des gaz acides présents dans les fumées issues du traitement thermique des déchets, ou procédé secs ou semi-secs, consiste à mettre en contact ces fumées avec un absorbant basique. Le rendement de neutralisation des gaz acides d'un tel procédé est d'environ 90-95%.

Un tel traitement présente néanmoins l'inconvénient de manipuler d'importantes quantités d'absorbant (au-delà de la stoechiométrie) qu'il faut ensuite traiter en sortie des dispositifs de dépoussiérage.

Une autre technique connue sous le nom de procédé dit "humide" comporte une étape où les fumées issues du traitement thermique sont lavées dans une tour de lavage par une solution diluée d'absorbant basique. Les rendements de neutralisation sont supérieurs à ceux du procédé dit "sec", de l'ordre de 99% et la consommation en absorbant est réduite. Néanmoins, ce procédé présente l'inconvénient de générer en quantité importante des effluents liquides pollués qu'il est nécessaire de traiter avant de les rejeter.

Le procédé de thermolyse offre une alternative originale aux procédés susmentionnés puisqu'il permet l'économie des installations de traitement de fumées.

Les demandes de brevet FR 90/13844 et FR 91/08718 du demandeur décrivent des dispositifs de thermolyse permettant de traiter les gaz acides qui sont fixés en partie ou en totalité par les résidus solides produits lors du traitement thermique. Pour cela, les gaz acides sont mis en contact avec des matières basiques présentes dans les déchets, cette auto-neutralisation étant favorisée notamment par l'atmosphère réductrice et les basses températures auxquelles les déchets sont soumis durant la thermolyse.

Le rendement de neutralisation obtenu par de tels procédés, dépend donc de la nature des déchets à traiter, des matières basiques accompagnant ces déchets ainsi que des conditions opératoires.

Un moyen de contrôler la neutralisation des gaz acides consiste à ajouter des composés basiques aux déchets afin de capter l'excédent de gaz acides. On améliore ainsi le rendement de neutralisation des gaz acides jusqu'à obtenir des rendements supérieurs à 99%. Cet ajout peut être réalisé pendant l'étape de thermolyse ou après.

Un des inconvénients notable d'un tel ajout dans ces procédés tient au fait que les absorbants utilisés sont de la chaux ou du calcaire.

En règle générale, les absorbants les plus fréquemment utilisés dans ce type de procédé sont des calcaires (CaCO3), des dolomies ( CaMg(CO3)2) ou encore des composés (Ca ₓmg ₁₋ₓ CO3), ou encore de la chaux Ca(OH)2 et ses dérivés et proviennent tous de gisements naturels .

L'obtention de tels composés, en particulier leur extraction conduit à des frais non négligeables qui contribuent à une augmentation du coût des dispositifs et des procédés de traitement.

De plus cette extraction contribue à appauvrir les gisements naturels formant la source de ces composés ou absorbants.

Il a été découvert et c'est l'un des objets de la présente invention que l'utilisation de produits de synthèse comportant en majorité du carbonate de calcium et les dispositifs de mise en oeuvre associés permettent de traiter les gaz acides issus, notamment de la thermolyse de déchets, en évitant les inconvénients des techniques connues. Les produits de synthèse sont des rejets ou déchets présentant des coûts nuls, voir négatifs.

Dans la suite du texte le terme absorbant est utilisé pour désigner des produits de synthèse ou déchets calciques utilisés pour le traitement des gaz acides et notamment leur neutralisation.

L'objet de la présente invention concerne un procédé de traitement de gaz acides issus, par exemple, d'un procédé de thermolyse de déchets.

Il est caractérisé en ce que l'on neutralise les gaz acides à l'aide d'au moins un produit de synthèse ou un rejet renfermant en majorité du carbonate de calcium et/ou un dérivé du carbonate de calcium.

Au moins une partie du produit de synthèse ou du rejet peut résulter d'une réaction chimique effectuée en présence d'un réactif dérivé de l'acide carbonique choisi parmi le groupe suivant: gaz carbonique, carbonate ou hydrogénocarbonate d'un élément.

Le produit de synthèse peut être un sous-produit ou un rejet du procédé industriel de fabrication de l'acétylène à partir de chaux et de charbon, ou procédé dit au carbure de calcium.

Le produit de synthèse peut être un sous-produit de l'industrie agricole et/ou agro-alimentaire comme les coquilles d'oeufs broyées et/ou de l'industrie de la pêche, tel que des coquillages broyés.

On peut aussi utiliser un sous-produit de l'industrie sucrière, par exemple des écumes de sucrerie dont les quantités en carbonate de calcium peuvent être variables.

Le produit de synthèse peut aussi être un sous-produit de l'industrie papetière telle que des écumes de sucrerie.

Selon un autre mode de mise en oeuvre du procédé selon l'invention, les produits de synthèse sont, par exemple des déchets de matériaux composites ou des sous-produits ou rejets de l'industrie de fabrication des matériaux composites et contiennent au moins un polymère de synthèse et au moins une charge minérale riche en carbonate de calcium.

Les produits de synthèse peuvent ainsi provenir de l'industrie concernant le domaine automobile tel que l'industrie automobile ou celle des équipementiers automobiles.

Le produit de synthèse peut être un déchet de fabrication d'un matériau comportant une résine polyester, des fibres de verre et du carbonate de calcium et/ou un dérivé du carbonate calcium.

Le produit de synthèse peut aussi être un mélange d'au moins deux produits précédemment mentionnés.

L'invention concerne aussi la mise en oeuvre d'un procédé de traitement des gaz acides contenus dans des déchets issus, par exemple, d'un procédé de thermolyse. Elle comporte au moins une étape au cours de laquelle on mélange au moins un produit de synthèse avec ces déchets avant d'effectuer la thermolyse, pour obtenir un mélange optimal du produit de synthèse avec les déchets à traiter.

On peut aussi injecter directement le produit de synthèse dans le dispositif réalisant la thermolyse des déchets, pour neutraliser les gaz acides dans la zone où ils se forment.

Une autre manière de procéder consiste à mettre en contact les gaz acides issus de l'étape de thermolyse directement après leur formation avec au moins un produit de synthèse, ce qui revient à neutraliser les gaz acides après leur formation.

La présente invention concerne aussi un dispositif permettant de neutraliser des gaz acides issus de déchet au cours d'une opération de traitement thermique, telle qu'une thermolyse.

Il est caractérisé en ce qu'il comporte une enceinte de traitement thermique, au moins un moyen d'injection des déchets et du produit de synthèse dans l'enceinte de traitement thermique.

Selon un mode de réalisation préférentiel, le dispositif peut comporter un dispositif de mélange des déchets et du produit de synthèse situé avant l'enceinte de traitement thermique pour optimiser la réaction de neutralisation se produisant dans l'enceinte thermique.

Selon une autre variante de réalisation du dispositif, le moyen d'introduction du produit de synthèse est situé dans une zone de l'enceinte de traitement thermique où la température est comprise entre 500 et 700°C.

Le dispositif peut aussi être caractérisé par le fait qu'il comporte une enceinte de traitement thermique munie d'une conduite d'évacuation des gaz acides, des moyens d'injection d'un produit de synthèse dans les gaz acides, une conduite où s'effectue le mélange des acides et du produit de synthèse dont la géométrie est choisie pour optimiser le contact gaz acides/produit de synthèse.

Ce dernier mode de réalisation peut comporter en outre un dispositif de séparation des gaz acides et du produit de synthèse situé à la fin de la conduite et, éventuellement, une ligne de recyclage du produit de synthèse partiellement utilisé.

L'utilisation de produits de synthèse, tels que les déchets calciques susmentionnés, sous-produits ou déchets de certaines industries offre notamment comme avantage de diminuer le coût des procédés du fait de leur coût nul voire négatif dans certains cas, ce qui confère à une telle utilisation un avantage économique non négligeable par rapport à l'emploi d'absorbants naturels commerciaux.

En outre, le principe consistant à utiliser des rejets élimine tout problème d'encombrement de tels rejets nécessitant, par exemple, un recyclage ou un stockage, ces deux opérations n'étant pas toujours aisées.

Selon la nature des rejets utilisés, on peut réaliser simultanément la neutralisation de gaz acide et l'élimination des rejets utilisés pour cette neutralisation.

De plus, l'exploitation de ces "gisements" provenant des industries, permet une meilleure préservation des ressources naturelles.

Les caractéristiques et avantages de l'invention apparaîtront mieux à la lecture de la description donnée ci-après d'exemples non limitatifs de réalisation, en se référant aux dessins annexés où :
- la figure 1 montre un dispositif permettant l'introduction des absorbants avant la formation des gaz acides,
- la figure 2 est une amélioration du dispositif de la figure 1 incluant un moyen tournant de brassage,
- la figure 3 montre un dispositif comprenant un dispositif de mélange à vis,
- la figure 4 schématise un dispositif avec introduction des absorbants dans une enceinte de traitement thermique des déchets, et
- la figure 5 montre un dispositif comprenant un dispositif de traitement des gaz acides après formation de ces derniers.

Certains éléments de base permettant de mettre en oeuvre le procédé selon l'invention sont connus de l'homme de métier. Ils ne seront donc pas décrits en détail dans la description, seuls leur fonction spécifique et/ou leur relation avec d'autres éléments seront énoncés. Il en est de même pour certains dispositifs ou parties de dispositifs décrits dans des demandes de brevets et des brevets précités dans la description.

Le procédé, afin de mieux cerner l'invention sera décrit pour son application à la neutralisation de gaz acides issus de la thermolyse de déchets comportant des composés susceptibles de libérer des gaz acides sous l'action de la chaleur, par décomposition thermique pour des températures comprises en général entre 200 et 1500°C et, de préférence, entre 300 et 900°C. Cette description n'est cependant nullement limitée à ce mode de réalisation de l'invention et s'étend bien entendu à tout traitement de gaz polluants dans lequel on met à profit la présence d'une composante calcaire existant dans des déchets ou rejets mise en présence avec les gaz acides directement ou indirectement.

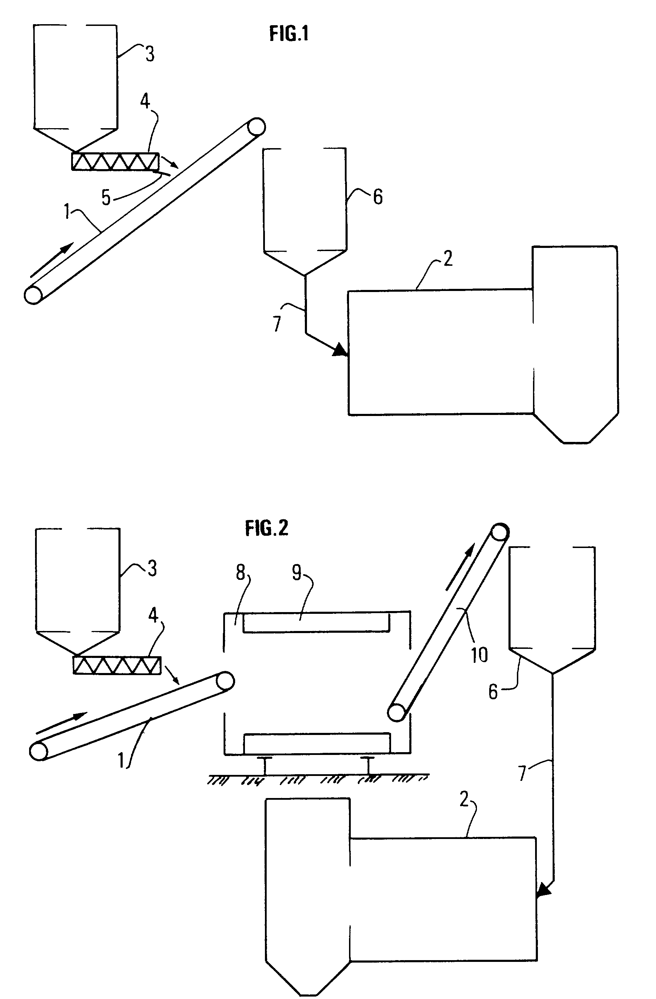

Les figures 1, 2 et 3 montrent des dispositifs permettant de neutraliser les gaz acides résultant, par exemple, d'une opération de thermolyse de déchets, dans lesquels, on mélange les déchets à traiter susceptibles de fournir les gaz acides avec au moins un absorbant ou produit de synthèse, le mélange étant ensuite envoyé dans une enceinte de traitement thermique

Suivant la Figure 1, le dispositif comporte une ligne d'arrivée 1 des déchets à traiter par exemple vers une capacité de stockage 6 située avant une enceinte de traitement thermique 2, par exemple un four à thermolyse, tout en permettant la mise en contact et le mélange de ces déchets avec au moins un absorbant ou un mélange d'absorbants. La ligne d'arrivée 1 peut être un tapis convoyeur, un élévateur à godets ou tout autre dispositif équivalent. Les absorbants sont contenus, par exemple dans une trémie de stockage 3 équipée d'un moyen de contrôle de dosage de l'absorbant, tel qu'un doseur à vis 4 ou une vanne rotative ou tout autre dispositif équivalent connu de l'homme de métier. L'absorbant est, par exemple dispersé grâce à un moyen approprié 5, vers les déchets à traiter et mélangé à ces derniers du fait de leur mouvement sur le tapis. Le mélange absorbant-déchet ainsi obtenu est ensuite introduit dans la capacité de stockage 6 avant d'être introduit par une ligne 7 dans le four à thermolyse 2.

Dans ce mode de réalisation la réaction de thermolyse s'effectue sur le mélange absorbant/ déchet, ce qui permet d'obtenir une neutralisation des gaz acides générés par la décomposition thermique des déchets à l'endroit de leur formation, ceci du fait de la présence d'élément absorbant en quantité suffisante dans le mélange. Les gaz acides polluants sont ainsi piégés et le restent dans le four de thermolyse, dès leur libération.

L'absorbant utilisé est par exemple un produit de synthèse qui peut résulter d'une réaction chimique mettant en jeu des composés réagissant entre eux en présence d'au moins un réactif dérivé de l'acide carbonique. Ce réactif peut être choisi parmi l'un des composés du groupe suivant : le gaz carbonique, le carbonate ou un hydrogénocarbonate d'un élément.

Une application avantageuse de l'invention consiste à utiliser un absorbant, tel qu'un déchet calcique provenant du procédé industriel de fabrication de l'acétylène à partir par exemple de chaux et de charbon ou procédé dénommée habituellement au carbure de calcium.

On peut aussi utiliser des sous-produits de l'industrie agricole et/ou agro-alimentaire tel que des coquilles d'oeufs broyées, ou encore provenant de l'industrie de la pêche tel que des coquillages broyés .

L'absorbant peut aussi provenir de l'industrie sucrière et se présenter sous forme d'écumes de sucrerie contenant des quantités variables de carbonate de calcium et/ou un dérivé du carbonate de calcium.

Dans certains cas, on utilisera comme absorbant un produit de synthèse provenant de l'industrie papetière comme des écumes de papeterie dont la teneur en calcium et/ou en dérivé du carbonate de calcium peut varier.

Les absorbants utilisés pour neutraliser les gaz acides peuvent aussi provenir de déchets de matériaux composites contenant au moins un polymère de synthèse et au moins une charge minérale riche en carbonate de calcium ou en dérivé du carbonate de calcium.

Ils peuvent aussi provenir de matériaux composites issus de l'industrie automobiles ou de l'industrie des équipementiers automobiles.

Les absorbants sont, par exemple, des déchets ou des rebuts de fabrication de "SMC- Sheet Molding Compound", qui est un matériau à base de résine de polyester, de fibres de verre et de carbonate de calcium.

Avec un tel absorbant, on neutralise les gaz acides et simultanément, on élimine ce déchet.

L'absorbant peut être choisi parmi l'un des rejets précédemment mentionnés et utilisé seul. Dans certains cas, il est avantageux d'utiliser un mélange de plusieurs rejets compatibles entre eux, c'est-à-dire dont le mélange conserve les propriétés d'absorbants des gaz acides polluants.

Ce mode de réalisation permet de manière simple et peu onéreuse de neutraliser les gaz acides au cours de la thermolyse des déchets.

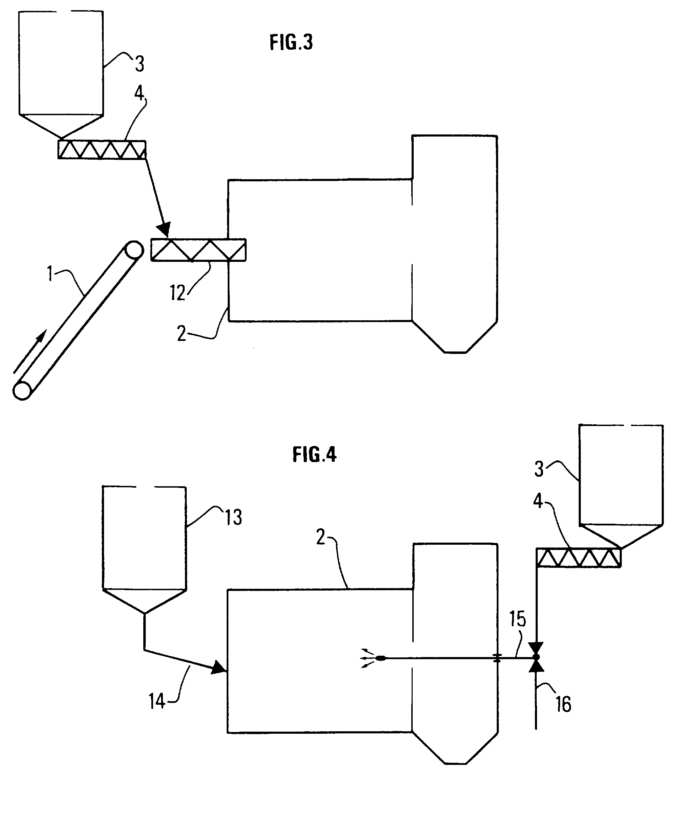

Les figures 2 et 3 permettent d'augmenter le rendement du dispositif de la figure 1, notamment en améliorant le mélange de l'absorbant avec les déchets à traiter.

On optimise ainsi le taux d'utilisation de l'absorbant, ce qui entraîne une plus faible consommation de ces derniers pour neutraliser les gaz acides tout en conservant un rendement au moins identique à l'exemple précédent.

Sur la figure 2, le mélange absorbant/déchets en mouvement sur le tapis 1 est introduit dans un dispositif 8 adapté à assurer un brassage efficace du mélange absorbant/déchet. Ce dispositif 8 est, par exemple, un cylindre tournant équipé d'aubes 9 positionnées selon les génératrices du cylindre. On améliore de cette façon le mélange déchet-absorbant et on facilite sa progression dans le cylindre tournant.

L'axe du cylindre peut être légèrement incliné par rapport à un plan horizontal pour faciliter le mouvement des déchets et de l'absorbant.

La rotation du cylindre et des aubes est, par exemple, assurée par un moteur non représenté sur la figure ou tout autre moyen approprié.

Le mélange optimisé est ensuite envoyé par une conduite 10 dans la capacité de stockage 6 avant d'être introduit dans le four de thermolyse 2 par la conduite 7 où les gaz acides sont neutralisés dans le four de la manière décrite en relation avec la figure 1.

Une autre manière de procéder schématisée à la figure 3 consiste à utiliser un dispositif de mélange par vis sans fin 12 qui optimise le mélange des déchets et de l'absorbant, le dispositif étant positionné directement avant le four de thermolyse 2. Ce dispositif est avantageusement constitué d'une ou de plusieurs vis sans fin jumelles.

Les déchets à traiter sont amenés par le tapis convoyeur 1 vers le dispositif de mélange 12 alors que l'absorbant provenant de la trémie 3 est envoyé par l'intermédiaire du dispositif de dosage 4 vers le dispositif de mélange 12.

Le mélange déchets à traiter/absorbant est ensuite introduit, de préférence, directement dans le four à thermolyse 2 dans lequel les gaz acides sont neutralisés ainsi qu'il a été décrit précédemment .

Un tel mode de réalisation permet d'obtenir un mélange homogène des déchets à traiter avec l'absorbant et un contrôle de la quantité du mélange déchet/absorbant à introduire dans le four à thermolyse. La neutralisation des gaz acides s'effectue à l'intérieur du four à thermolyse.

Le dispositif décrit à la figure 4 schématise un autre mode de réalisation pour neutraliser les gaz acides qui diffère des dispositifs précédemment décrits par le fait que l'on injecte directement l'absorbant dans le four de thermolyse. L'injection se fait, de préférence, en pulvérisant l'absorbant.

Les déchets à traiter stockés par exemple dans une capacité 13 sont introduits dans le four à thermolyse par une conduite 14. De préférence de manière simultanée, on injecte au moins un absorbant à l'aide d'un moyen approprié tel qu'une canne 15 dont une première extrémité est reliée à la trémie de stockage 3 équipée du dispositif de dosage 4, par exemple, et la seconde extrémité pénètre dans le four de thermolyse 2. L'absorbant est entraîné et pulvérisé dans la canne 15 à l'aide d'un gaz vecteur introduit par une conduite 16 reliant une source de gaz vecteur non représentée sur la figure et la canne 15.

Le gaz vecteur est de préférence un gaz inerte tel que de l'azote.

L'injection de l'absorbant se fait, de préférence, à un endroit du four où les conditions de température et de turbulence sont propices pour l'optimisation du rendement de neutralisation des gaz acides produits lors de la décomposition des déchets traités. Ainsi le four de thermolyse peut être équipé de dispositifs appropriés tels que des capteurs de température permettant de surveiller les gradients de température du four, ainsi que les températures en plusieurs endroits.

Ainsi, on injecte de préférence, l'absorbant dans une zone du four à thermolyse où la température est comprise entre 400 et 800°C et, de préférence, entre 500 et 700°C.

Un tel mode de réalisation convient particulièrement bien à des absorbants se présentant sous forme de particules dont la distribution granulométrique est fine, et dont la granulométrie est, de préférence inférieure à 1 mm.

Il offre de plus l'avantage d'augmenter le taux d'utilisation de ces absorbants et ainsi de réduire leur consommation.

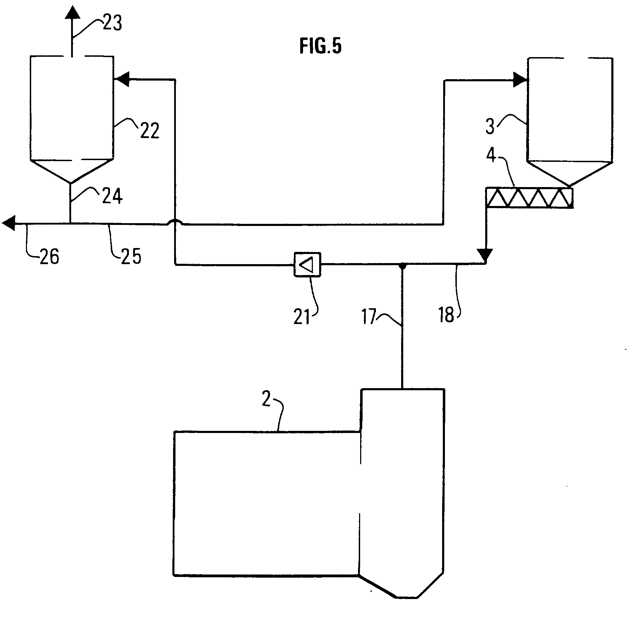

La figure 5 illustre une autre façon de procéder où les gaz acides formés sont neutralisés après leur formation, par exemple dans un endroit situé juste après le four de thermolyse, par exemple une conduite ayant une géométrie et une taille contrôlées favorisant ainsi le contact gaz-solides, notamment le temps de séjour des particules d'absorbant avec les gaz acides permettant notamment d'améliorer les rendements de neutralisation.

Un tel mode de réalisation convient particulièrement bien pour des absorbants dont la distribution granulométrique est fine, de préférence pour des absorbants ayant des tailles de particules inférieures à 1 mm.

Les gaz chauds issus de la thermolyse et chargés en gaz acides polluants sont extraits par une conduite 17 située, par exemple dans la partie supérieure du four à thermolyse 2.

L'absorbant ou le mélange d'absorbants délivré par la trémie 3 et la vanne de contrôle 4 est injecté dans les gaz ou phase gazeuse sous forme pulvérulente par l'intermédiaire d'un dispositif 18 situé sur une conduite 20 reliée à la conduite 17. Le processus de neutralisation des gaz acides est initié au début de la conduite 20 lors de la rencontre des gaz acides et de l'absorbant et se développe au fur et à mesure de la progression du mélange dans la conduite. Cette conduite est avantageusement maintenue sur toute sa longueur à une température voisine de celle des gaz à la sortie du four de thermolyse, par exemple à l'aide d'un traçage électrique ou grâce à de la vapeur, pour éviter la condensation des vapeurs d'hydrocarbures pouvant gêner la circulation du mélange.

La conduite 20 peut être équipée d'un dispositif 21, tel un venturi associé au dispositif d'injection 18 et situé sur la conduite 20 de manière à faciliter et optimiser le mélange de l'absorbant et des gaz chauds.

Les gaz chauds de thermolyse traités et dépollués dans la conduite 20 peuvent ensuite être séparés de l'absorbant. Pour cela la conduite 20 débouche dans un séparateur gaz-solides 22, par exemple un cyclone ou un ensemble de plusieurs cyclones disposés en série et/ou en parallèle. Les gaz dépollués sont évacués par exemple dans la partie supérieure du cyclone par un conduit 23 tandis que l'absorbant séparé des gaz pollués est extrait par une conduite 24 située dans la partie inférieure du cyclone.

Les absorbants partiellement utilisés, peuvent ensuite être recyclés en partie ou en totalité par un conduit 25 vers la trémie 3 de stockage de façon à être réutilisés pour une opération de neutralisation et améliorer leur taux d'utilisation, l'excédent des absorbants est évacué, par exemple, par une conduite 26.

Un contrôle de la qualité des gaz acides ainsi que des absorbants ayant réagi peut être effectué hors ligne. Une telle analyse permet, par exemple, de déterminer la quantité des absorbants à ajouter en fonction de la nature des gaz acides et/ou de décider de la possibilité de recycler ou non l'absorbant.

On ne sortira pas de la présente invention en adjoignant aux dispositifs décrits aux figures 1 à 5, des moyens d'analyse pouvant être situés en dehors du dispositif, hors ligne, dont la fonction permet notamment de contrôler la nature et la quantité des gaz acides et des absorbants. A l'aide de moyens de régulation il est alors possible de réguler la quantité d'absorbants à injecter pour optimiser le procédé de neutralisation des gaz acides, les émissions des polluants et la consommation d'absorbants.

Dans tous les modes de réalisation décrits précédemment, on utilise un absorbant ou un mélange d'absorbants compatibles entre eux pour neutraliser les gaz acides.

## Revendications

1. Procédé de traitement de gaz acides issus du procédé de thermolyse de déchets caractérisé en ce que l'on neutralise les gaz acides à l'aide d'au moins un produit de synthèse ou rejet renfermant en majorité du carbonate de calcium et/ou un dérivé du carbonate de calcium.

2. Procédé selon la revendication 1, caractérisé en ce qu'au moins une partie dudit produit de synthèse résulte d'une réaction chimique effectuée en présence d'un réactif dérivé de l'acide carbonique choisi parmi le groupe suivant: gaz carbonique, carbonate ou hydrogénocarbonate d'un élément.

3. Procédé selon la revendication 1, caractérisé en ce que le produit de synthèse est un déchet calcique résultant de la fabrication de l'acétylène.

4. Procédé selon la revendication 1, caractérisé en ce que le produit de synthèse se présente sous la forme de coquilles d'oeufs et/ou de coquillages broyées.

5. Procédé selon la revendication 1, caractérisé en ce qu'on utilise un produit de synthèse provenant de l'industrie sucrière tel que des écumes de sucrerie.

6. Procédé selon la revendication 1, caractérisé en ce qu'on utilise un produit de synthèse provenant de l'industrie papetière.

7. Procédé selon la revendication 1, caractérisé en ce qu'on utilise des déchets de matériaux composites contenant au moins un ou plusieurs polymères de synthèse et au moins une charge minérale riche en carbonate de calcium et/ou un dérivé du carbonate de calcium .

8. Procédé selon la revendication 7, caractérisé en ce qu'on utilise un matériau composite provenant de l'industrie automobile.

9. Procédé selon la revendication 1, caractérisé en ce que le produit de synthèse comporte une résine polyester des fibres de verre et une charge minérale riche en carbonate de calcium et/ou dérivé du carbonate de calcium.

10. Procédé de traitement des gaz acides issus du procédé de thermolyse des déchets selon la revendication 1, caractérisé en ce qu'il comporte au moins une étape où l'on met en contact le produit de synthèse avec les déchets avant le procédé de thermolyse de manière à obtenir un mélange optimal pour neutraliser les gaz acides .

11. Procédé selon la revendication 1, caractérisé en ce que l'on injecte directement le produit de synthèse dans le dispositif réalisant la thermolyse des déchets.

12. Procédé de traitement de déchets résultant d'un processus de thermolyse selon la revendication 1, caractérisé en ce que l'on met en contact le produit de synthèse avec les gaz acides issus du procédé de thermolyse après la thermolyse des déchets de manière à neutraliser lesdits gaz acides après leur formation.

13. Dispositif de neutralisation des gaz acides issus de la thermolyse de déchets à l'aide de produits de synthèse comportant au moins du carbonate de calcium et/ou un dérivé du carbonate de calcium caractérisé en ce qu'il comporte une enceinte de traitement thermique (2), au moins un moyen d'injection des déchets et du produit de synthèse dans l'enceinte de traitement thermique.

14. Dispositif selon la revendication 13, caractérisé en ce qu'il comporte un dispositif de mélange (3, 8, 9, 12) des déchets et du produit de synthèse situé avant l'enceinte de traitement thermique (2).

15. Dispositif selon la revendication 13, caractérisé en ce que le moyen d'injection du produit de synthèse est situé dans une zone de l'enceinte de traitement thermique où la température est comprise entre 500 et 700 °C.

16. Dispositif de neutralisation de gaz acides issus d'un traitement thermique de déchets comportant une enceinte de traitement thermique (2) munie d'une conduite d'évacuation des gaz acides (17), des moyens d'injection d'un produit de synthèse dans les gaz acides (18, 19, 21), caractérisé en ce qu'il comporte une conduite (20) où s'effectue le mélange des acides et du produit de synthèse dont la géométrie est choisie pour optimiser le contact gaz acides/produit de synthèse.

17. Dispositif selon la revendication 16, caractérisé en ce qu'il comporte en outre un dispositif de séparation des gaz et du produit de synthèse situé à la fin de la conduite (20) et une ligne de recyclage (25) du produit de synthèse.
